# EUROPEAN PATENT SPECIFICATION

(11) **EP 1 704 059 B1**
(45) Date of publication and mention of the grant of the patent: **25.06.2008**
(21) Application number: 05702184.2
(22) Date of filing: 05.01.2005
(51) Int. Cl.: B42D 15/00, B42D 15/10

(54) **PROCESS FOR FILM APPLICATION**
VERFAHREN ZUM AUFBRINGEN EINES FILMES
MÉTHODE POUR L'APPLICATION D'UN FILM

(30) Priority: 08.01.2004 EP 04000263
(43) Date of publication of application: 27.09.2006
(73) Proprietor: KBA-GIORI S.A., 1003 Lausanne (CH)
(72) Inventor: SCHAEDE, Johannes Georg, 97074 Würzburg (DE)
(74) Representative: Bugnion Genève
(86) International application number: PCT/IB2005/000013
(87) International publication number: WO 2005/068211

(56) References cited:
- EP-A- 0 498 040
- DE-A1- 3 526 012
- US-A- 4 531 765

## Description

The present invention concerns a process for a film application on a substrate, such a paper substrate or similar substrate used for securities.

In the field of banknotes and securities, there has been increasing needs for safety features protecting against counterfeiting. Indeed, in the past years, computers, scanners and copy machines have been extensively developed and today, it is possible to buy very performant devices at a reasonable price. Since these devices are more performant, it has been at the same time necessary to develop new and improved safety features for securities, such as banknotes, checks, cards (i.e. credit cards), ID cards, passports etc. which would not allow them to be copied by standard computers or scanners, or even modern color copy machines.

Such safety features include special inks, so called optical variable inks (OVI^{®}), used to print specific patterns on the substrate of the note, optical variable devices (OVD^{®}) in the shape of metallized patches or holograms, or also specific patterns, such as moiré patterns and other similar patterns, all of which are very difficult if not impossible to copy with actual devices, but, on the other hand, are easy to control visually.

Other safety means include combinations of superimposed lines and/or patterns with colors, which are only visible under specific conditions, for example UV light or by transparency. Again, the interest of such safety means is that they may easily be printed or placed on the document to be protected and also be controlled by simple devices, even visually with the naked eye, but they are impossible to reproduce with actual printers, scanners or copy machines.

Another specific technique involves watermarks in which the paper substrate is marked with lines or patterns only visible in transparency. A further development of this technique concerns pseudo-watermarks consisting in the creation of a window in the substrate, especially in paper-based substrates, which are normally not transparent, said window being transparent.

It is however very difficult to create or simulate a transparent window in a paper-based substrate. Transparent windows, as such, are widely used in polymer-based substrates for banknotes and securities, in order to provide a security element. These polymer-based substrates are usually completely transparent, therefore, to form a transparent window, it is only necessary to leave the chosen zone free of printing. However, in the case of paper, a substrate which is not transparent, a first process has been developed according to which, it is possible to reduce locally the thickness of the paper in order to create a transparent window in the substrate. PCT application WO 99/14433 for example, discloses this process. According to this known process, a soaking solution is applied on at least one surface of the paper in one or several predetermined zones, then one applies pressure and heat on the soaked zone so as to evaporate and densify the coated paper in said zone relative to the rest of the paper. Thus, said zones have a reduced thickness with respect to the rest of the paper and are transparent.

This first technique however has the drawback of weakening locally the paper in the zone comprising said window. In particular, the smaller the thickness of the window, the weaker the zone. Banknotes using such a technique thus have a reduced lifetime and must be exchanged, i.e. new bank notes must be printed to replace the older damaged ones.

Another technique implies to cut a hole directly in the paper in order to create the transparent window. For example, PCT application WO 95/10420 discloses said other technique. It is of course necessary to cover the hole cut in the substrate, which is done in this case by covering the hole with a strip of transparent material, e.g. a foil or a laminate. This document specifically uses the contrast between the transparency of the window and a diffraction structure used as an additional security feature and placed inside the window. Modern copy machines and scanners are indeed unable to copy a diffraction structure and also a transparent window.

A known process for reinforcing a substrate is known from European patent application 1 398 174, in which a substrate having a zone of reduced thickness, for example a hole, comprises reinforcing means formed by a transparent polymer material, in particular a foil, covering said zone.

Another publication disclosing a security document comprising a window sealed off by an at least transparent foil is the international application WO 95/10420.

European patent application N° 1 361 028 discloses a mechanical machine for cutting openings, such as windows, in a substrate.

US 4,531,765 discloses color coded ID cards formed by laminated documents, including a color-coded protective assembly comprising a pigment composition integrated with an adhesive bond within the assembly. According to the teaching of this prior art patent, the document comprises a pouch structure comprising inter alia a recess and a colourless transparent polyester cover sheet entirely coated with an adhesive also over the recess.

However, the known processes and devices have certain disadvantages.

For example such as taught by US 4,531,765, if the glueing material is present on the foil that is applied on the substrate, when a window is present in the substrate, the glueing material may then be transferred to other parts of the machine, which will then have to be cleaned.

DE-A-3526012 discloses an envelope with a window covered by a glued transparent film.

It is therefore an aim of the present invention to improve the known processes and machines.

A further aim of the present invention is to provide a process in which a foil can be applied onto a substrate with a window in a safe and precise manner.

Another aim of the present invention is to provide a process in which the contamination of the machines by the glueing material is brought to a minimum.

To this effect, the invention complies with the definition of the claims.

An advantage of the invention is that the cutting into the substrate and the predeposited glueing material will give perfect registration between window and glueing material.

Another advantage of the process according to the invention is the fact that the glueing material on the window edge prevents a peeling of the window edge.

A further advantage is that the layer of material, for example a laminate, carries no glueing material and for this reason will not stick to a thermo transfer tool in the window area.

The invention will be best understood with the description of an example of process and with reference to the accompanying drawings in which:
Figure 1 is a block-diagram of the process according to the invention;
Figure 2 is a schematical representation of the first step of the process according to the invention;
Figure 3 is schematical representation of the second step of the process according to the invention;
Figure 4 is schematical representation of the third step of the process according to the invention and
Figure 5 is a cross section of a substrate produced with the process according to the invention.

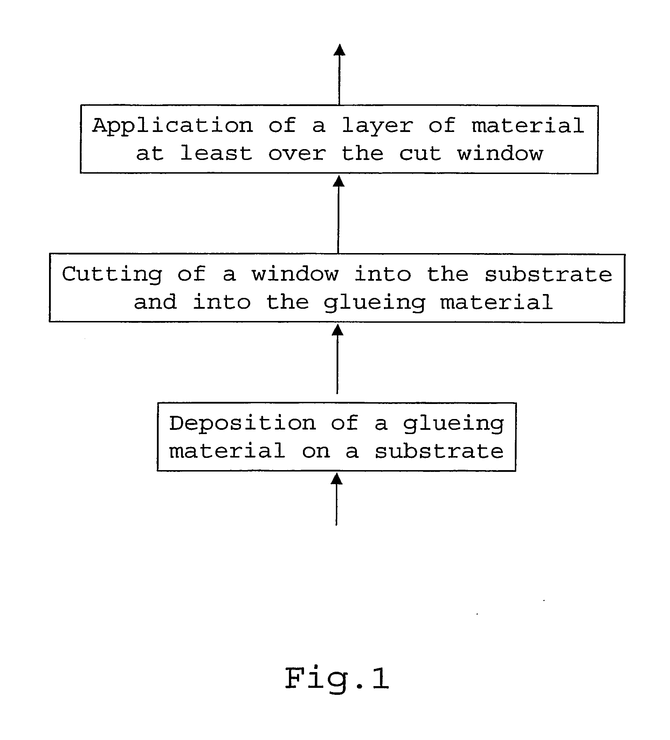

As shown in the figures, the process comprises the first step of deposition of a glueing material on the substrate 1 (see figure 1). The substrate may be a paper substrate, such as used to form securities, bank notes passports, checks or tickets and other similar products.

The substrate 1 may also be a polymer substrate such as a used for cards, credit cards, bankcards, or also a polymer substrate used for securities.

As one can readily understand, the substrate 1 is usually, but not limited thereto, a printed substrate.

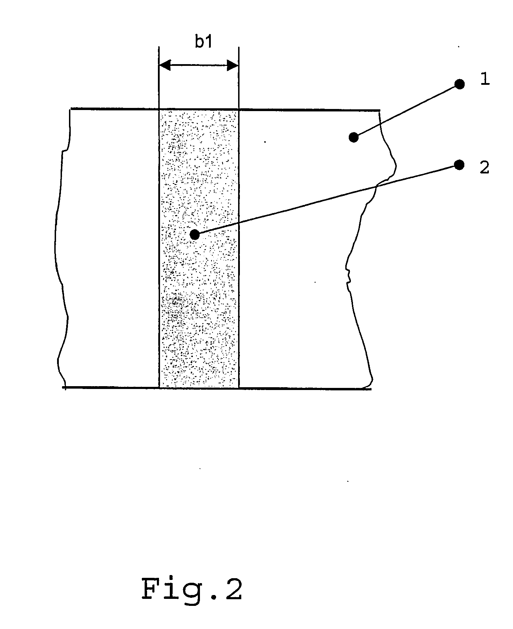

The glueing material, preferably a thermo transfer glue that is known in the art, is deposited as a strip 2 onto the substrate 1, as represented in figure 2. Many deposition processes known in the art can be used for the deposition of the glueing material, for example a screen deposition process.

The width b1 of the strip is defined by the width of the strip of material that will be glued to the substrate 1.

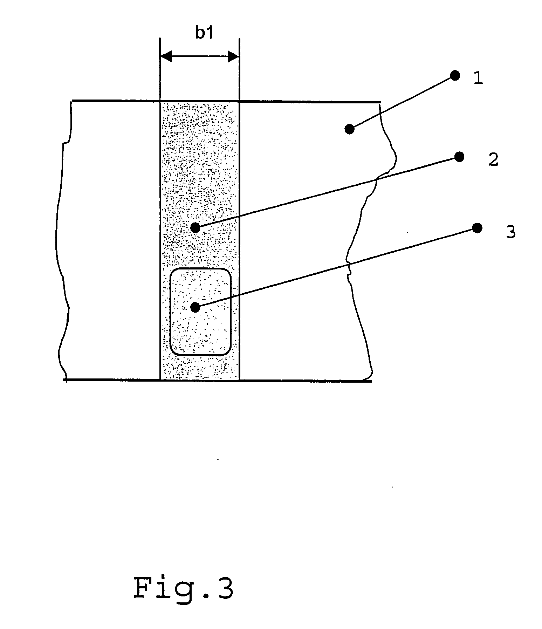

As a second step (see figures 1 and 3) a window 3 is cut into the substrate 1 and into the deposited strip of glueing material 2.

The cutting process can be a laser cutting process, as disclosed in EP application N°03009986.5 filed on May 2, 2003 in the name of KBA-GIORI S.A. or a mechanical cutting process as disclosed in EP application N° 1 361 028 mentioned above.

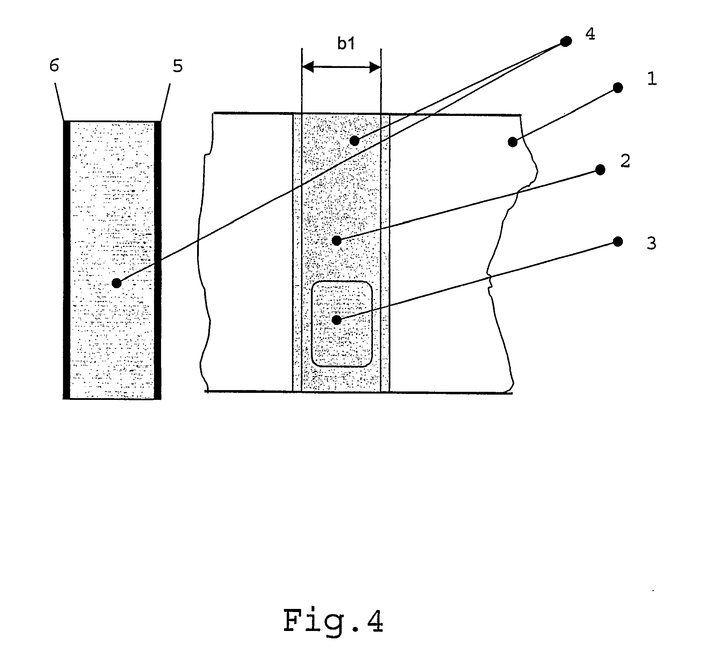

As a third step (see figures 1 and 4), the process comprises the application of a layer of material 4 at least over the cut window 3 and the activation of the glueing material.

Preferably, the layer of material 4 is a laminate strip. As shown in figure 4, the laminate strip preferably comprises two additional lateral strips of glueing material 5 and 6, made of thermo transfer glue, said lateral strips allowing to properly attach the peripheral zone of the layer of material 4 to the substrate 1.

The activation of the glueing material can be made by different processes, which depend on the glueing material used. For example, one can use heat as an activating means with a thermo glue, or one could use a two component glue whereby the one component located on the layer of material 4 in the window would not be activated, or one could use an UV activated glue, or any other suitable glueing material with its activation process.

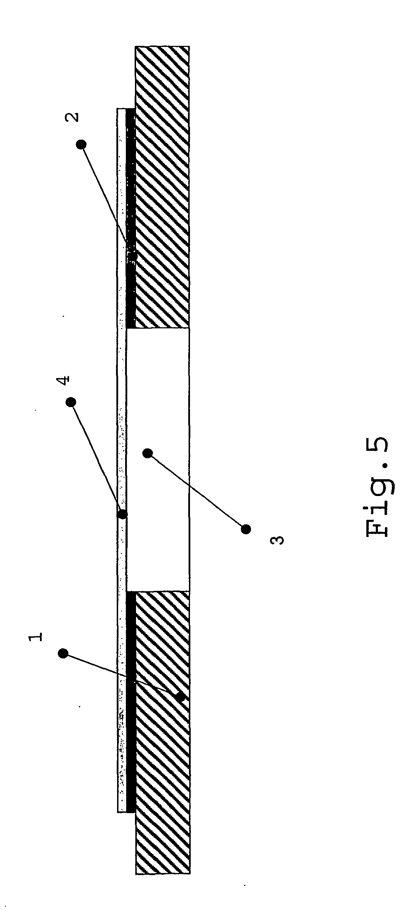

Figure 5 shows schematically a cross section of a substrate obtained by the process according to the invention with the substrate 1, for example a security, with a window 3 cut into the substrate and into a glueing material 3, covered by a layer of material 4, e.g. a laminate strip.

Of course, the present invention is not limited to the examples given but other equivalent designs are possible within the scope of protection. For example, the strip of material may have different shapes, such as a patch, a square or round strip or an elongated strip.

## Claims

1. Process for a film application on a substrate (1) used for securities, such as a paper substrate or other similar substrate, comprising the following steps:
-) deposition of a glueing material (2) on the substrate (1);
-) cutting of a window (3) into the substrate and into the deposited glueing material (2);
-) application of a layer of material (4) on said glueing material (2) and at least over the cut window (3), said layer carrying no glueing material (2) in the region where it overlies said window (3) and
-) activation of the glueing material (2).

2. A process according to claim 1, wherein a zone of said layer of material facing said substrate, outside the region where the layer of material overlies the window, is provided with a glueing material for cooperation with the glueing material deposited onto the substrate.

3. A process according to claim 2, wherein said layer of material is provided with said glueing material at least in a peripheral zone facing said substrate to provide proper attachment of said peripheral zone to said substrate.

4. A process according to one of claims 1 to 3, in which the glueing material is a thermo transfer glue.

5. A process according to on of claims 1 to 4, in which said cutting step is carried out by a laser or a by a knife.

6. A process according to one of claims 1 to 5, in which said layer of material is a strip of laminate.

7. A process according to one of claims 1 to 6, in which the activation of the glueing material is made by heat or by UV.

8. A process according to one of claims 1 to 7, in which said substrate is a paper substrate.

9. A process according to one of claims 1 to 7, in which, said substrate is a polymer substrate.

10. A process according to claim 8 or 9, in which the substrate is a printed substrate.

## Patentansprüche

1. Verfahren zum Aufbringen einer Folie auf einem für Wertpapiere verwendeten Trägermaterial (1), wie Papier oder einem anderen ähnlichen Trägermaterial, mit folgenden Schritten:
- Auftragen eines Klebematerials (2) auf dem Trägermaterial (1);
- Ausschneiden eines Fensters (3) in das Trägermaterial und in das aufgetragene Klebematerial (2);
- Aufbringen einer Materialschicht (4) auf das aufgetragene Klebematerial (2) wenigstens über das ausgeschnittene Fenster (3), wobei diese Schicht kein Klebematerial (2) in demjenigen Bereich trägt, in welchem sie das Fenster (3) überdeckt, und
- Aktivieren des Klebematerials (2).

2. Verfahren nach Anspruch 1, wobei ein Bereich der erwähnten, das Trägermaterial bedeckenden Materialschicht ausserhalb des Bereichs, in welchem die Materialschicht das Fenster überdeckt, mit einem Klebematerial versehen wird, um mit dem auf das Trägermaterial aufgetragenen Klebematerial zusammenzuwirken.

3. Verfahren nach Anspruch 2, wobei die erwähnte Materialschicht wenigstens in einem das Trägermaterial bedeckenden Umfangsbereich mit dem erwähnten Klebematerial versehen wird, um eine gute Befestigung des erwähnten Umfangsbereichs mit dem Trägermaterial zu erzielen.

4. Verfahren nach einem der Ansprüche 1 bis 3, wobei das Klebematerial ein durch Wärmeübertragung aktivierbarer Klebstoff ist.

5. Verfahren nach einem der Ansprüche 1 bis 4, wobei der Schritt des Ausschneidens mit einem Laser oder einem Messer ausgeführt wird.

6. Verfahren nach einem der Ansprüche 1 bis 5, wobei die erwähnte Materialschicht ein Laminatstreifen ist.

7. Verfahren nach einem der Ansprüche 1 bis 6, wobei die Aktivierung des Klebematerials durch Wärme oder UV-Strahlung erfolgt.

8. Verfahren nach einem der Ansprüche 1 bis 7, wobei das Trägermaterial ein Papiersubstrat ist.

9. Verfahren nach einem der Ansprüche 1 bis 7, wobei das Trägermaterial ein Polymersubstrat ist.

10. Verfahren nach Anspruch 8 oder 9, wobei das Trägermaterial bedruckt ist.

## Revendications

1. Procédé d'application d'un film sur un substrat (1) utilisé pour les papiers valeur, tel qu'un substrat en papier ou autre substrat similaire, comprenant les étapes suivantes :
-) dépôt d'un matériau adhésif (2) sur le substrat (1);
-) découpage d'une fenêtre (3) dans le substrat and dans le matériau adhésif (2) ;
-) application d'un couche d'un matériau (4) sur ledit matériau adhésif (2) et au moins sur la fenêtre découpée (3) ladite couche ne portant pas de matériau adhésif (2) dans la région superposée à ladite fenêtre (3) et
-) activation du matériau adhésif (2).

2. Procédé selon la revendication 1, dans lequel une zone de ladite couche de matériau faisant face audit substrat, en dehors de la région de la couche de matériau superposée à la fenêtre, est munie d'un matériau adhésif pour coopérer avec le matériau adhésif déposé sur le substrat.

3. Procédé selon la revendication 2, dans lequel ladite couche de matériau est munie dudit matériau adhésif au moins sur une zone périphérique faisant face audit substrat pour procurer une adhérence appropriée de ladite zone périphérique sur ledit substrat.

4. Procédé selon l'une des revendications 1 à 3, dans lequel le matériau adhésif est un adhésif à transfert thermique.

5. Procédé selon l'une des revendications 1 à 4, dans lequel l'étape de découpage est réalisée par un laser ou par un couteau.

6. Procédé selon l'une des revendications 1 à 5, dans lequel ladite couche de matériau est une bande d'un stratifié.

7. Procédé selon l'une des revendications 1 à 6, dans lequel l'activation du matériau adhésif est faite par chauffage ou par UV.

8. Procédé selon l'une des revendications 1 à 7, dans lequel le substrat est en papier.

9. Procédé selon l'une des revendications 1 à 7, dans lequel le substrat est un polymère.

10. Procédé selon l'une des revendications 8 ou 9, dans lequel le substrat est un substrat imprimé.
